# EUROPEAN PATENT SPECIFICATION

(11) **EP 2 372 170 B1**
(45) Date of publication and mention of the grant of the patent: **26.12.2012**
(21) Application number: 10157647.8
(22) Date of filing: 24.03.2010
(51) Int. Cl.: F16B 2/22, F16B 2/24, B64C 1/06

(54) **Assembling device for cabin interior components**
Montagevorrichtung für Kabineninnenteile
Dispositif d'assemblage pour composants d'intérieur de cabine

(43) Date of publication of application: 05.10.2011
(73) Proprietor: INTERTECHNIQUE, 78373 Plaisir Cédex (FR)
(72) Inventor: Rittner, Wolfgang, 23623 Siblin (DE); Meckes, Rüdiger, 23919 Berkenthin (DE); Weinmann, Hasso, 23564 Lübeck (DE)
(74) Representative: Eisenführ, Speiser & Partner

(56) References cited:
- DE-A1- 10 220 808
- DE-A1- 19 607 786
- DE-A1-102007 060 953
- DE-B3-102007 042 484

## Description

The invention relates to an assembling device for assembling cabin interior components into an aircraft according to the preamble of claim 1.

A general problem associated with cabin interior is the need to fit individual components into the cabin system in a flexible but safe manner. Airlines tend to demand increasingly individual equipments to differentiate its cabin interior from other airlines and thus aircraft manufacturers have to follow such demand.

However, any assembling devices for cabin interior used in aircrafts must provide a reliable fixation of the cabin interior component for which it is used, i.e. a fixation resistant against high forces acting onto the assembling device in the course of high accelerations occurring in an aircraft during flight, vibration and other impacting loads. In particular it is required that such assembling devices are able to withstand the high loads which might occur in an aircraft accidence to safely prevent that cabin interior components are released or move in case of such accidence. It is further desirable to provide an assembling device which is able to compensate misalignments due to manufacturing tolerances and to allow an easy and fast assembling and disassembling of the cabin interior component. Finally, in many applications it is desirable to provide an assembling device which allows for an easy access to the assembled component for maintenance purposes.

DE 10 2007 060 953 A1 discloses a ratchet device having a first ratchet leg and a second ratchet leg, wherein the first ratchet leg has a first free end and the second ratchet leg has a second free end. The ratchet device can be introduced and mounted into a hollow profile. An activating element is provided at the first free end of the first ratchet leg to allow removing of the ratchet device without problems out of the hollow profile.

Document DE 102 20 808 A1 discloses a device for releasably mounting of a first part to a second part mounted into an aircraft A coupling element is provided having a first end for mounting to a first part and a second end for mounting to a second part. The second end is equipped with a contact section for abutting a second leg of a rail. Further, a flexible locking section is provided for locking at the free end of the second leg of the second part. The locking section can be moved into an unlocking position by enabling an actuation section.

It is the object of the invention to provide an assembling device overcoming the drawbacks of existing assembling devices for cabin interior components of an aircraft and fulfilling the above demands.

According to the invention, an assembling device according to claim 1 is provided.

The assembling device of the invention provides for an easy assembling and disassembling procedure in that a rail fixed to the aircraft is provided on the one hand and a bracket fixed to the cabin interior component is provided on the other hand. The bracket has a first and second leg which are elastically movable to each other and are adapted to be clipped into a recess of the rail thus establishing a form locking coupling, i.e. a mechanical connection preventing removal of the bracket from the rail by a direct force transmission independent from frictional forces. By this, it is possible to mount the bracket with a single action which can be exerted by one hand by a user to the rail thus significantly facilitating the mounting process. However, even the disassembling is significantly facilitated in that a disassembling part is provided allowing to exert a force onto the second leg to move said second leg in relation to the first leg and thus to release said form locking coupling and to remove said bracket from said rail. The face provided at the disassembling part connected to the second leg may be adapted to allow the exertion of a force by the hand of a user or by a tool such as a screw driver inserted into a hole or recess of the cabin interior component for such purpose.

According to the invention, at least one scratch edge at the first leg and/or at the second leg is provided, wherein said scratch edge is/are engaging the rail, when the bracket is clipped into the rail, said engagement preventing a relative movement of the bracket in relation to the rail in said longitudinal direction. It is to be understood that this embodiment may be provided as an alternative or an additional measure to the above described preferred embodiment having a frictional contact. A scratch edge is particular useful to safely prevent a relative movement of the bracket along the rail but at the same time allowing a reliable and efficient manufacturing of the bracket. Basically, a sort of microscopic form locking engagement is provided by such a scratch edge being slightly indented into a rail. Further, such a construction is in particular helpful since such a scratch edge may be manufactured by stamping, embossing or the like, in particular if the bracket is made from metal sheet and can thus be provided without additional manufacturing steps in a reliable way. Generally, it is to be understood that both the frictional engagement and the engagement of a scratch edge could be established by respective contact areas of the bracket and the rail which are engaging if the bracket is in the assembled position in the rail but which can be released from each other by exerting a force onto the disassembling part of the bracket. By this, it is possible to slide the bracket along the rail if a certain first force is exerted onto said disassembling part wherein said first force is smaller than a second force required to disassemble the bracket from the rail completely. This allows for a fast and easy alignment of cabin interior components in the direction of the rail. Preferably, said scratch edge is adapted to engage the rail in such a way that a movement of the bracket in both longitudinal directions of the rail is prevented. Alternatively, two or more scratch edges are provided, wherein a first scratch edge provides for a form locking effect in a first longitudinal direction and a second scratch edge provides for a form-locking effect in a second opposite direction to said first longitudinal direction.

According to a first preferred embodiment, the assembling device is further Improved by a first frictional contact area at the first leg and/or a second frictional at the second leg, wherein said frictional contact area(s) is/ are in frictional contact to the rail, when the bracket is clipped into the rail, said frictional contact preventing a relative movement of the bracket in relation to the rail In said longitudinal direction. Generally, the assembling device according to the invention should be able to follow some limited relative misalignment or movement between the rail and the cabin interior component to compensate for manufacturing tolerances and external impacts. In particular, it is desirable that the bracket shall be able to be fixed to the rail at any position along the longitudinal extension of the rail to allow a flexible mounting of different cabin interior components along said rail. For example, a typical cabin interior component which is to be mounted by such bracket to said rail is an emergency oxygen supply system or a passenger entertainment unit or the like. However, after assembling the cabin interior component, the assembling device shall not only provide for a fixation preventing the unintended disassembling of said component but further preventing a relative movement of said component along said rail. This function is provided by a frictional engagement between said bracket and said rail, whereas said frictional engagement can be provided by either the first or the second leg and the rail or both legs. It is to be understood, that for achieving such function, a specific frictional surface shall be provided at the bracket, e. g. a roughened surface or a specifically coated surface to establish the desired frictional contact ensuring that a movement of the bracket along the rail is prevented. Thus, the frictional contact area should have another surface configuration than other areas of the bracket, in particular should have a higher roughness or should be coated with a specific material establishing such frictional contact to the rail. Alternatively, or additionally, the corresponding contact areas of the rail may be adapted to provide such frictional engagement in a sufficient extent.

In particular, it is preferred that the scratch edge is provided by a lug or plate provided in a recess of the first and/or the second leg. This allows for a stamping and bending process to establish said scratch edge and thus provides for an efficient manufacturing process of the bracket. Still further, the scratch edge according to this preferred embodiment is not prone to induce injuries of the user or to affect any other surfaces of the cabin interior component in the course of the assembling or disassembling process.

A further preferred embodiment is characterized in that the rail has a lower hardness than the scratch edge of the bracket, in particular than the whole bracket. By this, an enhanced form locking engagement is achieved between the bracket and the rail, said form-locking engagement securing the bracket against any movement along the rail, i.e. in the longitudinal direction of the rail. This form-locking effect is achieved in that the scratch edge can dig itself at least partially into the rail. By this, it is possible to safely keep the bracket in a predetermined position along the rail even if high longitudinal forces act onto the cabin interior component fixed by said bracket to said rail like e.g. in case of an accident of the aircraft.

According to a further preferred embodiment, the mounting part is coupled to the first leg via a hinge defining a rotational axis, said axis extending preferably in said longitudinal direction. Such a hinge allows for two important functions of the assembling device according to the invention. First, any tolerances can easily be leveled out by such hinge and thus it is prevented that the connection between the bracket and the rail is unintentionally released by forces exerted following such manufacturing tolerances or a combination of such tolerances and vibrational forces occurring in flight. The hinge may have a single axis or maybe a multiple axis hinge to provide for this function. Secondly, such a hinge may allow to rotate the cabin interior component without removing said hinged bracket from the rail. This will allow access to a rear surface of the cabin interior component, e.g. for maintenance purposes or the like. Thus, such a hinged bracket may be used in combination with a fixation of the cabin interior components via two parallel rails and respective brackets wherein the cabin interior component is fixed to one rail via such hinged bracket and to the other rail via a non-hinged bracket, wherein only the non-hinged bracket must be released to allow maintenance of the cabin interior component.

According to a further preferred embodiment, the first leg is connected to said second leg via an elastic part, said elastic part providing said biasing force and forming a conical introducing portion at one end of said bracket for introducing the first and second leg into the rail. This embodiment allows for an easy introduction of the bracket into the rail since such a conical elastic part may provide a self-centering and self-positioning of the bracket in relation to the rail if it is introduced into said rail. The elastic part may be formed like a flat spring or an elastic integral hinge. Further, by such a design of the bracket a compensation of manufacturing tolerances and/or assembling tolerances within the cabin interior can easily be achieved without deteriorating the safety and reliability of the connection of the bracket and the rail.

Still further, it is preferred to form the bracket from a single metal sheet by stamping and bending or to form the bracket from a plastic material by injection molding. These two alternative manufacturing methods are specifically well-suited to produce a bracket having elastic properties on the one hand but sufficient strength to carry the loads and stresses exerted onto such brackets in use in the fixation of cabin interior components of an aircraft. Still further, both methods are particularly well-suited to establish a frictional contact area or a scratch edge preventing sliding of the bracket along the rail in the mounted state.

Finally, it is preferred that the disassembling part protrudes from the second leg in the direction of the mounting part and preferably comprises a recess for positioning a tool. By this, the disassembling part can easily be accessed with a finger or a tool from the direction where the cabin Interior component is usually arranged which is preferable for a number of mounting arrangements of cabin interior components within an aircraft.

A preferred embodiment of the invention is described in connection with the Figures, wherein
Fig. 1 is a perspective front side view of a bracket according to the invention,
Fig. 2 is a perspective rear side view of a bracket according to claim 1,
Fig. 3 is a cross-sectional view of the bracket according to claim 1,
Fig. 4 is a side elevational view of the bracket of Fig. 1,
Fig. 5 is a cross-sectional view showing a cabin interior component mounted to a bracket according to the invention fixed to a rail according to the invention,
Fig. 6 is a view according to Fig. 5 showing the disassembling step using a tool,
Fig. 7 is a perspective rear side view of a second embodiment of a bracket according to the invention,
Fig. 8 is a cross-sectional view according to Fig. 5 showing the bracket according to the second embodiment in a first position and
Fig. 9 is a view according to Fig. 8 showing the cabin interior component in a second position.

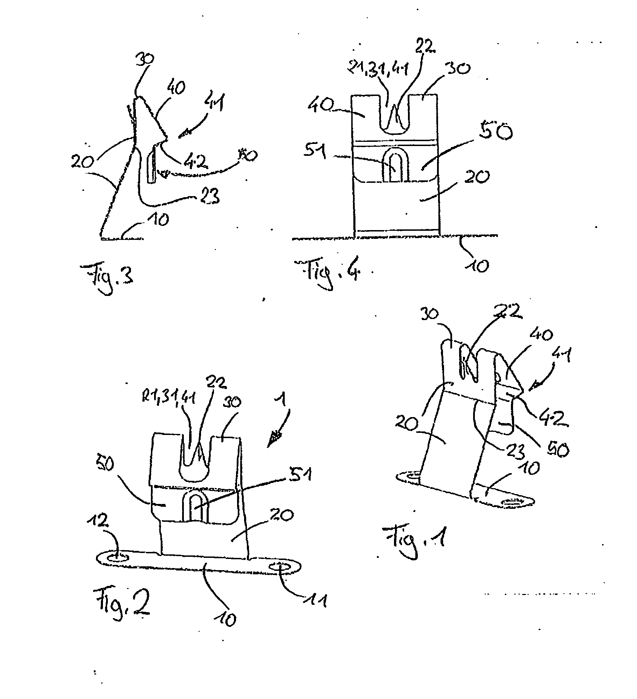

Referring first to Figs. 1 - 4, a bracket 1 according to a first embodiment of the invention comprises a mounting part 10 having two openings 11, 12 for mounting a cabin interior component via elastic clips or via screws or bolts or the like to the bracket. The mounting part is formed like a rectangular flange and a first leg 20 is connected to said flange via a curved bending angle more than 90°.

The first leg 20 extends to an elastic region 30 between said first leg and a second leg 40. The elastic region 30 is configured as an angled region and provides for a curvature between 90 and 180°, in particular approximately 160° and thus allows an elastic movement of the first leg 20 in relation to the second leg 40.

In the region of said curvature 30 and the regions of the first and second leg 20, 40 adjacent to said curvature, a recess 21, 31, 41 is provided in the middle part of the curvature and the first and second leg. A sharp tooth 22 is extending into said recess on the side of the first leg 20. This sharp tooth 20 is integrally formed from the first leg and is bended slightly outwards in relation to the first leg. By this, the sharp tooth forms a scratch edge which is able to engage a rail into which the first and second leg is inserted and to prevent sliding of the bracket along such rail.

The first leg is bended at a small angle in a region 23 below said sharp tooth in relation to the angled region 30. On the opposite side of this small angled region 23 of the first leg, the second leg is provided with a form locking contour 41 establishing a form locking surface 42 which is approximately tangential to the radius of relative movement of the second leg 40 provided by the elastic region 30.

A disassembling part 50 is further integrally formed at the end of the form locking part of the second leg. This disassembling part 50 includes a middle part which is formed as a recess 51 in relation to the surrounding region of the disassembling part to allow centering of a tool and a form locking action between a tool and the disassembling part.

It is to be understood, that the mounting part 10, the second leg 40, the sharp tooth 22, the first leg 20, the form locking contour 41 and the disassembling part 50 are integrally formed from a single metal sheet or a single plastic material, as shown in Figs. 1 - 4. By this, it is possible to manufacture the bracket 1 in a stamping and bending process or in an injection molding process.

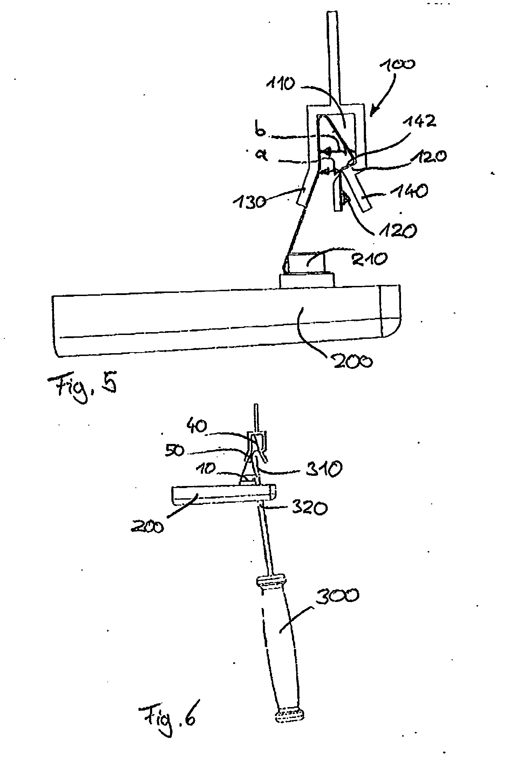

Fig. 5 shows the bracket mounted to a rail 100 of a cabin interior system. As can be seen from Fig. 5, the rail 100 comprises an interior rail space 110 having an opening slot 120 which has a smaller dimension a than a corresponding dimension b of the interior rail space. By this, a form locking part 120 is established at the rail which is able to interact and engage with the form locking part 142 of the second leg of the bracket. Such engagement is shown in Fig. 5.

Still further, the rail comprises an introductory portion established by two rail faces 130, 140 converging into the region of the rail slot. This facilitates introduction of the bracket into the rail in the assembling step.

A cabin interior component 200 is mounted to the mounting part of the bracket by screws 210 which are screwed through the openings 11, 12 in the mounting part 10.

Fig. 6 shows the disassembling step of the assembling device according to the invention. As can be seen from this Figure, a tool such as a screw driver 300 is inserted through an opening provided in the cabin interior component 200 and by this is brought into engagement with the disassembling part 50 formed at the second leg 40. By this, a force acting against the elastic biasing force between the first and second leg can be exerted onto the second leg 40 wherein the tip 310 of the screw driver exerts said force onto the disassembling part 50 and the shaft 320 of the screw driver is supported in the opening of the cabin interior component thus acting against the mounting part 10 of the bracket. By exerting such disassembling force onto the disassembling part, the second leg can be bend in the direction to the first leg for such a distance that the form locking engagement between the form locking part 41 of the second leg and the form locking face 120 of the rail is released and the bracket can be removed out of the rail.

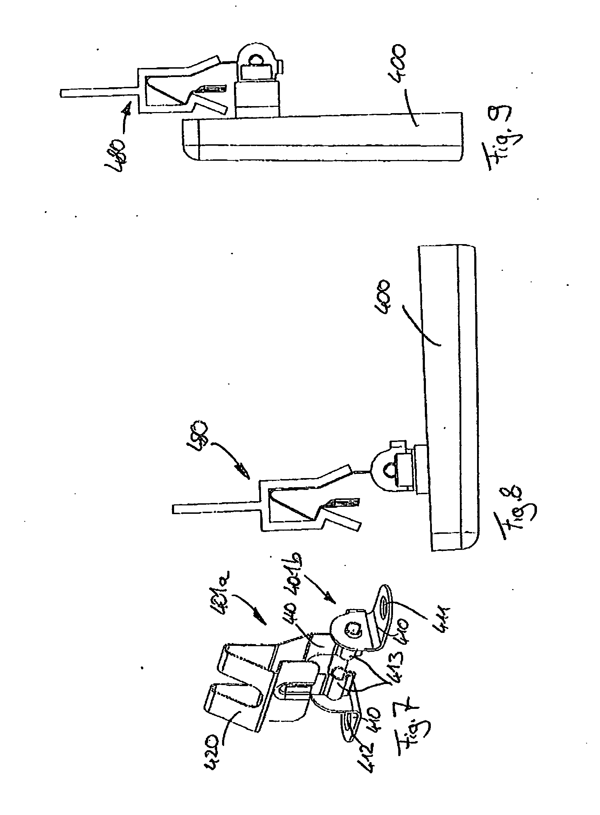

Fig. 7 shows a second embodiment of a bracket according to the invention. Generally, it is to be understood that the upper part 401 a of this second embodiment of the bracket is formed in the same way as the upper part of the bracket according to the first embodiment, i.e. the bracket according to the second embodiment identically shows a first 420 and second leg 440 with a bended elastic portion coupling these two legs, a central recess with an outwardly bended tooth and a disassembling part extending from the second leg.

In contrast to the first embodiment in the lower part 401 b, the second leg of the second embodiment is not integrally connected to the mounting part. Instead, a hinge 413 is provided connecting the second leg 440 to the mounting part 410. Said hinge 413 defines an axis which is perpendicular to the axis through the openings 411, 412 of the mounting part 410 and which extends along the extension of the form locking part of the second leg and thus correspondingly to the extension of a rail to which said second embodiment of the bracket can be mounted.

Fig. 8 shows the bracket according to the second embodiment in a mounted state. As can be seen, the assembly and the form locking function of the upper part of the bracket within the rail is identical to the bracket according to the first embodiment. The cabin interior component 400, however, now is mounted to said rail 480 via the hinge 413 and thus can be rotated along the axis defined by said hinge.

Fig. 9 shows the cabin interior component in a rotated state, wherein maintenance of the cabin interior component is possible. As can be seen, the cabin interior component is rotated by 90°. It is to be understood, that such rotational movement can either be used for maintenance purposes but may also be helpful in the course of assembling or disassembling the cabin interior component.

## Claims

1. An assembling device for assembling cabin interior components into an aircraft, comprising a bracket (1) having
○ a mounting part (10) integrally connected to a first leg (20),
○ a second leg (40), integrally connected to said first leg (20) and being relatively moveable from a first position to a second position, wherein in the first position a mounting region of the first leg is in a smaller distance to a mounting region of the second leg than in the second second position,
wherein the elastic movement of the first leg (20) in relation to the second leg (40) is provided by an elastic part (30) of the bracket (1) and the two legs are biased into the second position in relation to each other to allow clipping the bracket (1) into a rail (100) and establishing a form-locking coupling of the bracket (1) to such rail (100) a disassembling part (50) connected to the second leg (40), said disassembling part (50) having face arranged to exert force onto said second leg (40) acting against said biasing force and moving the first (20) and second leg (40) into the first direction **characterized by** at least one scratch edge (22) at the first leg (20) and/or at the second leg (40) wherein said scratch edges (22) is/ are engaging the rail (100), when the bracket (1) is clipped into the (100) rail, said engagement preventing a relative movement of the bracket (1) in relation to the rail (100) in said longitudinal direction.

2. The assembling device of claim 1, comprising:
- a rail (100) extending in a longitudinal direction, said rail (100) defining an interior rail space (110) having an opening slot (120) extending in said longitudinal direction and giving access to said interior rail space (110), wherein said opening slot (120) has a dimension in an oblique direction perpendicular to said longitudinal direction, which is smaller than a dimension of said interior rail space in said oblique direction.

3. Assembling device according to claim 1 or 2,
**characterized by** a first frictional contact area at the first leg (20) and/or a second frictional at the second (40), wherein said frictional contact area(s) is/ are in frictional contact to the rail (100), when the bracket is clipped into the rail, said frictional contact preventing a relative movement of the bracket in relation to the rail in said longitudinal direction.

4. Assembling device according to claim 1 or 2,
**characterized in that** the scratch edge (22) is provided by a lug or plate provided in a recess of the first and/or the second leg.

5. Assembling device according to any of the preceding claims,
**characterized in that** the rail (100) has a lower hardness than the scratch edge (22) of the bracket, in particular than the whole bracket.

6. Assembling device according to any of the preceding claims,
**characterized in that** the mounting part (10) is coupled to the first leg (20) via a hinge (413) defining a rotational axis, said axis extending preferably in said longitudinal direction.

7. Assembling device according to any of the preceding claims,
**characterized in that** the first leg (20) is connected to said second leg (40) via an elastic part, said elastic part providing said biasing force and forming a conical introducing portion at one end of said bracket (1) for introducing the first and second lecond leg (20,40) into the rail (100).

8. Assembling device according to any of the preceding claims,
**characterized in that** the bracket (1) is formed from a single metal sheet by stamping and bending.

9. Assembling device according to any of the preceding claims,
**characterized In that** the brack (1) is formed from a plastic material by injection molding.

10. Assembling device according to any of the preceding claims,
**characterized in that** the disassembling (50) protrudes from the second leg in the direction of the mounting part (10) and preferably comprises a recess for positioning a tool.

## Patentansprüche

1. Aufbauvorrichtung zum Aufbau von Kabineninnenkomponenten in einem Flugzeug, umfassend eine Klammer (1) aufweisend
o ein Montierteil (10), welches integral mit einem ersten Schenkel (20) verbunden ist,
o einen zweiten Schenkel (40), welcher integral mit dem ersten Schenkel (20) verbunden ist und relativ aus einer ersten Position in eine zweite Position bewegbar ist, wobei ein Montierbereich des ersten Schenkels in der ersten Position in einem kleineren Abstand zu einem Montierbereich des zweiten Schenkels liegt als in der zweiten Position,
wobei die elastische Bewegung des ersten Schenkels (20) in Relation zu dem zweiten Schenkel (40) durch einen elastischen Teil (30) der Klammer (1) bereitgestellt ist und die zwei Schenkel in die zweite Position in Bezug aufeinander vorgespannt sind, um ein Einstecken der Klammer (1) in eine Schiene (100) zu ermöglichen und um ein formschlüssiges Koppeln der Klammer (1) an diese Schiene (100) zu schaffen,
ein Abbauteil (50), welches mit dem zweiten Schenkel (40) verbunden ist, wobei das Abbauteil (50) eine Fläche aufweist, die angeordnet ist, um eine Kraft auf den zweiten Schenkel (40) auszuüben, die gegen die Vorspannkraft wirkt und den ersten (20) und zweiten Schenkel (40) in die erste Richtung bewegt,
**gekennzeichnet durch** wenigstens eine Kratzecke (22) an dem ersten Schenkel (20) und/oder an dem zweiten Schenkel (40), wobei die Kratzekke(n) (22) mit der Schiene (100) in Eingriff steht/stehen, wenn die Klammer (1) in die Schiene (100) eingesteckt ist, wobei der Eingriff eine relative Bewegung der Klammer (1) in Relation zu der Schiene (100) in der longitudinalen Richtung verhindert.

2. Aufbauvorrichtung nach Anspruch 1, umfassend:
- eine sich in longitudinaler Richtung erstreckende Schiene (100), wobei die Schiene (100) einen Innenschienenraum (110) definiert, welcher einen Öffnungsschlitz (120) aufweist, der sich in der longitudinalen Richtung erstreckt und einen Zugang zu dem Innenschienenraum (110) bietet, wobei der Öffnungsschlitz (120) eine Abmessung in einer geneigten Richtung rechtwinklig zu der longitudinalen Richtung aufweist, die kleiner als eine Abmessung des Innenschienenraumes in die geneigte Richtung ist.

3. Aufbauvorrichtung nach Anspruch 1 oder 2,
**gekennzeichnet durch** einen ersten Reibungskontakt-Flächenabschnitt an dem ersten Schenkel (20) und/oder einen zweiten Reibungskontakt-Flächenabschnitt an dem zweiten Schenkel (40), wobei der/die Reibungskontakt-Flächenabschnitt(e) in Reibungskontakt mit der Schiene (100) ist/sind, wenn die Klammer in die Schiene eingesteckt ist, wobei der Reibungskontakt eine Relativbewegung der Klammer in Relation zu der Schiene in der longitudinalen Richtung verhindert.

4. Aufbauvorrichtung nach Anspruch 1 oder 2,
**dadurch gekennzeichnet, dass** die Kratzecke (22) durch eine Lasche oder Platte bereitgestellt ist, die in einer Ausnehmung des ersten und/oder zweiten Schenkels bereitgestellt ist.

5. Aufbauvorrichtung nach einem der vorstehenden Ansprüche,
**dadurch gekennzeichnet, dass** die Schiene (100) eine geringere Härte als die Kratzecke (22) der Klammer, insbesondere als die gesamte Klammer, aufweist.

6. Aufbauvorrichtung nach einem der vorstehenden Ansprüche,
**dadurch gekennzeichnet, dass** das Montierteil (10) mit dem ersten Schenkel (20) über ein Gelenk (413) gekoppelt ist, welches eine Rotationsachse definiert, wobei sich die Achse vorzugsweise in der longitudinalen Richtung erstreckt.

7. Aufbauvorrichtung nach einem der vorstehenden Ansprüche,
**dadurch gekennzeichnet, dass** der erste Schenkel (20) mit dem zweiten Schenkel (40) über ein elastisches Teil verbunden ist, wobei das elastische Teil die Vorspannkraft bereitstellt und einen schrägen Einführabschnitt an einem Ende der Klammer (1) bildet zum Einführen des ersten und zweiten Schenkels (20, 40) in die Schiene (100).

8. Aufbauvorrichtung nach einem der vorstehenden Ansprüche,
**dadurch gekennzeichnet, dass** die Klammer (1) von einer einzigen Metalllage durch Stanzen und Biegen gebildet wird.

9. Aufbauvorrichtung nach wenigstens einem der vorstehenden Ansprüche,
**dadurch gekennzeichnet, dass** die Klammer (1) durch Spritzgießen aus einem Plastikmaterial gebildet wird.

10. Aufbauvorrichtung nach einem der vorstehenden Ansprüche,
**dadurch gekennzeichnet, dass** das Abbauteil (50) von dem zweiten Schenkel in Richtung des Montierteils (10) ragt und vorzugsweise eine Ausnehmung zur Positionierung eines Werkzeugs umfasst.

## Revendications

1. Dispositif d'assemblage permettant d'assembler des composants intérieurs de cabine dans un aéronef, comprenant une console (1) comportant :
- une pièce de montage (10) solidairement raccordée à une première jambe (20),
- une seconde jambe (40) solidairement raccordée à ladite première jambe (20) et qui est relativement mobile d'une première position à une seconde position, où, dans la première position, une région de montage de la première jambe est à une plus petite distance d'une région de montage de la seconde jambe que dans la seconde position, dans lequel le mouvement élastique de la première jambe (20) par rapport à la seconde jambe (40) est fourni par une pièce élastique (30) de la console (1) et les deux jambes sont sollicitées dans la seconde position l'une par rapport à l'autre pour permettre un pinçage de la console (1) dans le rail (100) et établir un couplage à verrouillage de forme de la console (1) sur un tel rail (100),
une pièce de désassemblage (50) raccordée à la seconde jambe (40), ladite pièce de désassemblage (50) ayant une face agencée pour exercer une force sur ladite seconde jambe (40) agissant contre ladite force de sollicitation et déplaçant la première (20) et la seconde (40) jambe dans la première direction,
**caractérisé par** au moins un bord de rayure (22) au niveau de la première jambe (20) et/ou de la seconde jambe (40), dans lequel ledit/lesdits bord(s) de rayure est/sont en prise avec le rail (100), lorsque la console (1) est pincée dans le rail (100), ladite mise en prise empêchant un mouvement relatif de la console (1) par rapport au rail (100) dans ladite direction longitudinale.

2. Dispositif d'assemblage selon la revendication 1, comprenant :
- un rail (100) s'étendant dans une direction longitudinale, ledit rail (100) définissant un espace de rail intérieur (110) ayant une fente d'ouverture (120) s'étendant dans ladite direction longitudinale et donnant accès audit espace de rail intérieur (110), où ladite fente d'ouverture (120) a une dimension dans une direction oblique perpendiculaire à ladite direction longitudinale, qui est plus petite qu'une dimension dudit espace de rail intérieur dans ladite direction oblique.

3. Dispositif d'assemblage selon la revendication 2 ou 3,
**caractérisé par** une première zone de contact par frottement au niveau de la première jambe (20) et/ou d'une seconde zone de contact par frottement au niveau de la seconde jambe (40), dans lequel ladite/lesdites zone(s) de contact par frottement est/sont en contact de frottement avec le rail (100), lorsque la console est pincée dans le rail, ledit contact par frottement empêchant un mouvement relatif de la console par rapport au rail dans ladite direction longitudinale.

4. Dispositif d'assemblage selon la revendication 1 ou 2,
**caractérisé en ce que** le bord de rayure (22) est fourni par une oreille ou une plaque disposée dans un évidement de la première et/ou de la seconde jambe.

5. Dispositif d'assemblage selon l'une quelconque des revendications précédentes,
**caractérisé en ce que** le rail (100) a une dureté inférieure au bord de rayure (22) de la console, en particulier de la console entière.

6. Dispositif d'assemblage selon l'une quelconque des revendications précédentes,
**caractérisé en ce que** la pièce de montage (10) est couplée à la première jambe (20) via une charnière (413) définissant un axe de rotation, ledit axe s'étendant de préférence dans ladite direction longitudinale.

7. Dispositif d'assemblage selon l'une quelconque des revendications précédentes,
**caractérisé en ce que** la première jambe (20) est raccordée à ladite seconde jambe (40) via une pièce élastique, ladite pièce élastique fournissant ladite force de sollicitation et formant une portion d'introduction conique à une extrémité de ladite console (1) pour introduire la première et la seconde jambe (20, 40) dans le rail (100).

8. Dispositif d'assemblage selon l'une quelconque des revendications précédentes,
**caractérisé en ce que** la console (1) est formée d'une seule tôle de métal par poinçonnage et cintrage.

9. Dispositif d'assemblage selon l'une quelconque des revendications précédentes,
**caractérisé en ce que** la console (1) est formée d'une matière plastique par moulage par injection.

10. Dispositif d'assemblage selon l'une quelconque des revendications précédentes,
**caractérisé en ce que** la pièce de désassemblage (50) fait saillie de la seconde jambe dans la direction de la pièce de montage (10) et de préférence comprend un évidement pour positionner un outil.
